# EUROPÄISCHE PATENTSCHRIFT

(11) **EP 1 686 147 B1**
(45) Veröffentlichungstag und Bekanntmachung des Hinweises auf die Patenterteilung: **23.07.2008**
(21) Anmeldenummer: 06100676.3
(22) Anmeldetag: 20.01.2006
(51) Int. Cl.: C08J 5/12

(54) **Verfahren zur Herstellung eines Verbundes**
Process for producing a composite
Procédé de préparation d'un composite

(30) Priorität: 28.01.2005 DE 102005004280
(43) Veröffentlichungstag der Anmeldung: 02.08.2006
(73) Patentinhaber: Evonik Degussa GmbH, 40474 Düsseldorf (DE)
(72) Erfinder: Kuhmann, Karl, 48249, Dülmen (DE); Hülsmann, Klaus, 48703, Stadtlohn (DE); Wielpütz, Martin, 48145, Münster (DE); Mertens, Walter-Konrad, 46286, Dorsten (DE); Schaub, Ursula, 45770, Marl (DE); Alting, Kristen, 48159, Münster (DE); Amesöder, Simon, 90427, Boxdorf (DE); Hoffmann, Leo, 90766, Fürth (DE)

(56) Entgegenhaltungen:
- WO-A-20/05111122
- DE-A1- 10 146 295
- DE-A1- 10 308 989
- US-A- 5 780 132

## Beschreibung

Gegenstand der Erfindung ist ein Verfahren zur Herstellung eines Verbundteils, das eine Komponente aus einer Formmasse auf Basis eines höheren Polyamids enthält.

Aufgrund ihres Eigenschaftsprofils, beispielsweise Schlagzähigkeit, geringe Wasseraufnahme, Chemikalien-, Alkohol-, Kraftstoff- und Lösemittelbeständigkeit sind höhere Polyamide, insbesondere solche, deren Monomereinheiten im Durchschnitt mindestens 8 C-Atome enthalten, für Oberflächen gut geeignet, die Umwelteinflüssen wie z. B. feuchter Atmosphäre oder Streusalz bzw. der Einwirkung von Kraftstoffen, Ölen, Fetten oder Gemischen mit Alkoholen ausgesetzt sind. Bauteile, die verschiedene Funktionen erfüllen müssen, werden häufig aus mehreren Schichten bzw. mehreren Teilen aufgebaut, die an einer Verbindungsfläche miteinander verbunden sind. Aufgrund der Materialeigenschaften höherer Polyamide ist es hierbei oft zweckmäßig, zumindest eine der Schichten bzw. eines der Teile aus einer Formmasse auf Basis eines höheren Polyamids auszubilden. Typische Beispiele hierfür sind mittels einer Folie dekorierte Artikel oder Elemente eines kraftstoff- oder ölführenden Systems. Derartige Bauteile sind Stand der Technik. Bei ihrer Herstellung wählt man entweder miteinander verträgliche Formmassen oder man setzt einen Haftvermittler ein. Da die allermeisten Kunststoffe miteinander unverträglich sind und somit nicht aufeinander haften, verwendet man in der Praxis meist einen Haftvermittler, der üblicherweise als Schicht eingebracht wird. Das Bauteil erhält so eine zusätzliche Komponente, die in vielen Fällen zu den anwendungstechnisch geforderten Eigenschaften des Bauteils wenig beiträgt und zudem die Herstellung komplizierter macht; beispielweise wird hierdurch bei der Coextrusion ein zusätzlicher Extruder erforderlich. Beim Mehrkomponentenspritzgießen werden zusätzliche Spritzaggregate für die jeweiligen Komponenten in Kombination mit häufig aufwendiger Werkzeugtechnik (Core-Back-Werkzeuge, Dreh- und Indexplattenwerkzeuge) eingesetzt. Es wäre daher wünschenswert, wenn es gelänge, ein Teil aus einer Formmasse auf Basis eines höheren Polyamids mit einem Teil aus einer beliebigen anderen Formmasse haftend miteinander zu verbinden, ohne einen Haftvermittler einsetzen zu müssen.

Alternative Lösungsstrategien in der Praxis basieren bei chemisch/thermodynamisch inkompatiblen Materialkombinationen derzeit auf formschlüssigen Verbindungen wie Hinterschnitte und Durchbrüche, auf werkstofflichen Ansätzen wie z. B. die Haftungsmodifizierung oder auf der Anwendung von Oberflächenverfahren wie das Primern mit einem gegebenenfalls gelösten Haftvermittler, das Beflammen, die Coronabehandlung oder die Niederdruck-Plasmabehandlung. Allerdings sind diese Lösungen häufig mit zusätzlichem handhabungstechnischen Aufwand oder erhöhten Materialkosten verbunden. Eine lokal begrenzte und flexible Oberflächenbehandlung ist dabei zudem oft nicht möglich. Einschränkungen ergeben sich zusätzlich beim Verbund großflächiger Bereiche oder bei der Verarbeitbarkeit, wenn beispielsweise zwei unterschiedliche Werkstoffe in einem gemeinsamen Werkzeugsystem mit jeweils unterschiedlichen optimalen Werkzeugtemperaturen verarbeitet werden.

Die der Erfindung zugrundeliegende Aufgabe bestand daher darin, Verbundteile, die eine Komponente aus einer Formmasse auf Basis eines höheren Polyamids enthalten, ohne Mitverwendung eines Haftvermittlers und unter Vermeidung der obengenannten Nachteile auf einfache Weise so herzustellen, dass in den Fertigungsablauf möglichst wenig eingegriffen werden muss.

Diese Aufgabe wird gelöst durch ein Verfahren zur Herstellung eines Verbundteils, das folgende Komponenten enthält:
a) ein Teil, das ganz oder teilweise aus einer Formmasse besteht, die zu mindestens 40 Gew.-%, bevorzugt mindestens 50 Gew.-%, besonders bevorzugt mindestens 60 Gew.-%, insbesondere bevorzugt mindestens 70 Gew.-% und ganz besonders bevorzugt mindestens 80 Gew.-% oder mindestens 90 Gew.-% ein Polyamid enthält, dessen Monomereinheiten im Durchschnitt mindestens 8, mindestens 9, mindestens 10 oder mindestens 11 C-Atome enthalten, sowie
b) ein Teil aus einer weiteren Formmasse,
   wobei mindestens eine der Komponenten a) und b) an der Kontaktfläche vor Herstellen des Verbundes mit einem Openairplasma behandelt wird und danach die andere Komponente angeformt wird.

Gegenstand der Erfindung sind auch die nach diesem Verfahren hergestellten Verbundteile.

Die Teile gemäß a) und b) sind hierbei Formteile (z. B. Spritzgussteil, Extrudat, Pressteil) oder Halbzeuge (z. B. Ein- oder Mehrschichtfolien, textile Gebilde etc.).

Geeignete Polyamide des Teils gemäß a) sind beispielsweise PA610, PA612, PA613, PA6,3T, PA810, PA812, PA1010, PA1012, PA11, PA12, PA1212 sowie PA PACM12. Anstelle dieser Homopolyamide können auch darauf basierende Copolyamide, Polyetheramide oder Polyetheresteramide eingesetzt werden.

Neben dem Polyamid kann die Formmasse noch Zusatzstoffe enthalten, die ausgewählt sind aus
- für Polyamide üblichen Schlagzähmachern, beispielsweise Ethylen/α-Olefin-Copolymeren (insbesondere EPM und EPDM) oder Styrol-Ethylen/Butylen-Blockcopolymeren (insbesondere SEBS), wobei in allen diesen Fällen der Schlagzähmacher zusätzlich funktionelle Gruppen wie z. B. Säureanhydrid trägt, oder auch α-Olefin/Acrylester-Co-oder Terpolymere mit einem olefinisch ungesättigen Säureanhydrid, Glycidylacrylat oder Glycidylmethacrylat als Co- oder Terkomponente;
- andere Polymere wie beispielsweise ein anderes Polyamid oder Copolyamid, einen thermoplastischen Polyester wie z.B. Polyethylenterephthalat, Polybutylenterephthalat, Polypropylenterephthalat, Polyethylen-2.6-naphthalat, Polypropylen-2.6-naphthalat, Polybutylen-2.6-naphthalat, einen hierauf basierenden Copolyester, ein Polyolefin wie z.B. Polypropylen oder ein Fluorpolymer;
- Füllstoffe und Pigmente wie Ruß, Titandioxid, Glaskugeln, Hohlglaskugeln, Talkum, Zinksulfid, Silikate, Carbonate oder Nanopartikel wie z. B. exfolierte bzw. interkalierte Schichtsilikate;
- Verstärkungsstoffe wie Glasfasern, Aramidfasern, Whiskers oder Nanotubes, z.B. auf Kohlenstoffbasis;
- Zusätze, die der Formmasse antielektrostatische Eigenschaften oder eine elektrische Leitfähigkeit verleihen wie z.B. Carbonfasern, Graphitfibrillen, Metallfasern wie z. B. Fasern aus rostfreiem Stahl, Metallpulver oder Leitfähigkeitsruß;
- Flammschutzmittel wie Magnesiumhydroxid, Aluminiumhydroxid, Melamincyanurat, phosphorhaltige Flammschutzmittel, bromierte aromatische Verbindungen, auch z.B. bromiertes Polystyrol oder bromiertes Polycarbonat;
- übliche Hilfs- bzw. Zusatzstoffe wie z.B. Weichmacher, Wachse, Antioxidantien, UV-Stabilisatoren oder Nukleierungsmittel;
- magnetische Füllstoffe wie z. B. Keramikpartikel, Ferrite, seltene Edelmetalle;
- IR-absorbierende Zuschlagstoffe, um z. B. einen Schweißvorgang nach vorhergehender Plasmaaktivierung zu ermöglichen.

Das Teil gemäß a) kann eine zusätzliche Schicht enthalten, die mit der Formmasse auf Basis des höheren Polyamids haftend verbunden ist. Geeignete Schichtenmaterialien sind beispielsweise Formmassen auf Basis von anderen Polyamiden, Polyestern, funktionalisierten Polyolefinen oder Styrol/Maleinsäureanhydrid-Copolymeren. Die jeweilige Formmasse enthält in der Regel mindestens 50 Gew.-% eines oder mehrerer Polymerer und maximal 50 Gew.-% der üblichen Zusatzstoffe.

Das Teil gemäß b) besteht in einer Ausführungsform aus einer Formmasse auf Basis eines beliebigen thermoplastischen Polymeren, wobei die Formmasse in der Regel mindestens 40 Gew.-% eines oder mehrerer Polymerer und maximal 60 Gew.-% der üblichen Zusatzstoffe enthält. Geeignete Polymere sind beispielsweise Polyamide wie PA6, PA66 oder PA6/6T, Polyolefine wie Polyethylen, Polypropylen oder Polybuten-1, Polyoxymethylen (POM), Acrylnitril-Butadien-Styrol-Copolymere (ABS), Polycarbonat (PC), PC/ABS-Blends, Polyester wie Polyethylenterephthalat, Polypropylenterephthalat, Polybutylenterephthalat, Polyethylen-2.6-naphthalat, Polypropylen-2.6-naphthalat, Polybutylen-2.6-naphthalat, PMMA, Polyphenylensulfid (PPS) oder ein thermoplastisches Elastomer sowie Mischungen hiervon.

In einer anderen Ausführungsform besteht das Teil gemäß b) aus einem vorzugsweise vulkanisierten Kautschukcompound. Geeignete Basiskautschuke sind beispielsweise ein EP(D)M-Kautschuk, ein SB-Kautschuk (als E-SBR oder L-SBR), BR, NR, IR, IIR, CIIR, BIIR, NBR, CR, FPM, ACM, AEM bzw. AECM, ein styrolhaltiges Blockcopolymer und/oder ein Polyalkenylen.

EP(D)M-Kautschuke sind Kautschuke, die in bekannter Weise durch Polymerisation eines Gemisches aus Ethylen und Propylen und gegebenenfalls eines Diens in Gegenwart eines Ziegler-Natta-Katalysators hergestellt werden.

Beim SB-Kautschuk kann es sich sowohl um E- als auch um L-SBR mit einem Styrolanteil bis maximal etwa 40 Gewichtsprozent handeln.

E-SBR wird in bekannter Weise durch Polymerisation in Emulsion hergestellt, während L-SBR durch Polymerisation in Lösung hergestellt wird.

Butadienkautschuk (BR) kann in bekannter Weise beispielsweise durch Polymerisation mit Hilfe von Li- oder Co-Katalysatoren hergestellt werden.

Naturkautschuk (NR) wird üblicherweise in der cis-1,4-Konfiguration verwendet. Jedoch ist im Rahmen dieser Erfindung auch die trans-1,4-Konfiguration geeignet.

Isoprenkautschuk (IR) kann unabhängig davon verwendet werden, ob er z. B. mit Ti- oder Li-Katalysatoren hergestellt wurde.

Isobuten-Isopren-Kautschuk (IIR) kann als solcher oder in halogenierter Form (CIIR bzw. BIIR) verwendet werden.

Nitrilkautschuk (NBR) wird durch Copolymerisation von Butadien und Acrylnitril in Masseverhältnissen von ca. 51 : 48 bis 82 : 18 gewonnen. Er kann gegebenenfalls auch hydriert sein.

Chloroprenkautschuk (CR) wird üblicherweise durch radikalische Emulsionspolymerisation hergestellt.

FPM ist ein Copolymer aus Propen und Tetrafluorethylen und weist eine besonders hohe Chemikalienbeständigkeit auf. ACM ist ein Acrylatkautschuk; AEM bzw. AECM sind Ethylen-Acrylester-Kautschuke.

Als styrolhaltiges Blockcopolymer können alle bekannten Typen auf Basis von Styrol/Butadien oder Styrol/Isopren verwendet werden. Beispiele hierfür sind SB, SBS und SIS sowie entsprechende Typen, die eine größere Anzahl von Blöcken enthalten. Die Copolymeren können hierbei linear oder verzweigt sein. Darüber hinaus kann die Weichphase hydriert sein; entsprechende Blockcopolymere werden auch als Styrol-Ethylen-Butylen-Styrol-Blockcopolymere (SEBS) bezeichnet.

Polyalkenylene werden durch ringöffnende bzw. ringerweiternde Polymerisation von Cycloalkenen dargestellt [siehe K. J. Ivin, T. Saegusa, "Ring-opening Polymerisation", Vol. 1, Elsevier Appl. Sci. Publishers, London, insbesondere Seiten 121 bis 183 (1984)]. Hiervon werden Polyoctenylene bevorzugt (vgl. A. Dräxler, Kautschuk + Gummi, Kunststoff 1981, Seiten 185 bis 190). Polyoctenylene mit unterschiedlichen Anteilen an cis- und trans-Doppelbindungen sowie unterschiedlichen Molekulargewichten sind nach literaturbekannten Methoden erhältlich.

Im Kautschukcompound können selbstverständlich auch Mischungen verschiedener Kautschuke vorliegen. Art und Menge der übrigen Bestandteile, wie Füllstoffe, Vulkanisationsmittel, Weichmacher und Vulkanisationsaktivatoren richten sich nach der Art des Kautschuks und den anwendungstechnischen Voraussetzungen. In der Regel werden auf 100 Gewichtsteile Kautschuk 0 bis 300 Gewichtsteile Füllstoffe, 1 bis 10 Gewichtsteile Vulkanisationsmittel, 0 bis 4 Gewichtsteile Vulkanisationsaktivatoren und 0 bis 200 Gewichtsteile Weichmacher eingesetzt.

Das Openair-Verfahren ist ein atmosphärisches Plasmaverfahren zur Vorbehandlung von Oberflächen. In einer geschlossenen Plasmakammer wird mittels Hochspannungsentladung ein Plasma erzeugt. Dieses wird mit Hilfe eines Trägerstroms, beispielsweise eines Druckluftstroms, als nicht thermisches, weitgehend potentialfreies Plasma auf die Oberfläche des Bauteils geführt.

Der Plasmastrahl kann bei den derzeit gebräuchlichen Vorrichtungen, abhängig von der Leistung der Düse, bis zu 50 mm lang sein und eine Behandlungsbreite von 15 mm erzielen. Die Plasmaquelle wird je nach erforderlicher Behandlungsleistung im Abstand von 10 bis 40 mm mit einer Geschwindigkeit von 6 bis 900 m/min relativ zur Oberfläche des Behandlungsmaterials bewegt. Eine entsprechende Erweiterung dieser technischen Kennwerte ist im Rahmen verfahrens- und anlagentechnischer Weiterentwicklung möglich.

Zur Anpassung der Plasmaeinwirkung an Bauteilgeometrie und Werkstoff stehen variable Düsengeometrien und angepasste Fahrbewegungen zur Verfügung. Beispielsweise kann der Plasmakopf über einen 6-achsigen Knick-Arm-Roboter in definiertem Abstand über die zu behandelnde Oberfläche des im Werkzeug positionierten Bauteils gelenkt werden. So ist die Vorbehandlung von eingelegten Teilen , z. B. Folien, als auch zuvor spritzgegossener oder extrudierter Vorformlinge möglich.

Die kurze Einwirkzeit des Plasmastroms ermöglicht eine schonende, dabei jedoch effiziente Vorbehandlung. Die energiereichen Teilchen des Plasmas sind Ausgangspunkt für schnell ablaufende physikalisch-chemische Prozesse an der Oberfläche, die zu einer Aktivierung führen.

Geeignete Vorrichtungen sind beispielsweise in der EP 0 761 415 A2, der WO 99/52333 und der WO 01/43512 beschrieben.

Durch geeignete Wahl der Trägergases kann gleichzeitig eine Beschichtung der Oberfläche erfolgen, wodurch die Haftung zur anderen Komponente ebenfalls verbessert werden kann. Ein geeignetes Verfahren zur Plasmabeschichtung ist in der WO 01/32949 beschrieben.

Ein Verfahren zur Openair-Plasmaaktivierung einer Folienoberfläche und anschließendes Hinterspritzen ist in der DE 103 08 989 A1 beschrieben. Die WO 2004/076 155 und die WO 2004/103 680 beschreiben das entsprechende Vorgehen beim Zweikomponentenspritzgießen. Das Verfahren ist darüber hinaus im Artikel von S. Amesöder in Kunststoffe Bd. 93, Nr. 9 (2003), Seiten 124-129 mit dem Titel "Plasma sorgt für festen Verbund" näher beschrieben.

Nach der Plasmabehandlung wird der Verbund durch Anformen mittels Anspritzen, Hinterspritzen, Hinterschäumen, Hinterprägen, Aufextrudieren, Heißpressen, Schweißen, Beschichten und dergleichen hergestellt. Speziell beim Strahlungsschweißen kann durch vorhergehenden Einsatz absorbierender Zuschlagstoffe eine Verbindung z. B. mittels IR- oder Laserschweißen bei relativ niedrigen Prozessdrücken hergestellt werden. Beim Laserdurchstrahlschweißen wird entweder die Komponente a) oder die Komponente b) durchstrahlt und die absorbierende Schicht angeschmolzen.

Ein Anwendungsbereich für die erfindungsgemäßen Verbundteile sind beispielsweise Elemente eines kraftstoff-, kühlflüssigkeits- oder ölführenden Systems, z. B. in einem Automobil, beispielsweise Anschlusselemente. Derartige Anschlusselemente werden gemäß dem Stand der Technik bislang unter Herstellen eines Formschlusses oder unter Verwendung eines Haftvermittlers hergestellt (DE 42 39 909 C1; EP 1 241 229 A1; EP 0 836 044 A1; EP 1 323 973 A2; EP 1 403 030 A1 und DE 195 35 413 C1). Mit dem erfindungsgemäßen Verfahren werden hier Verbunde erhalten, bei denen die Haftfestigkeit auch bei langandauerndem Kontakt mit Kraftstoff, Alkoholen, Ölen, Fetten und dergleichen nicht wesentlich beeinträchtigt wird.

Beispielsweise sind Verbindungsstücke bzw. Connectorelemente möglich, die z. B. im 2K-Spritzgussverfahren und unter Openair-Plasmaeinsatz hergestellt werden und aus PA12- und Polyethylenbereichen bestehen. Die Polyethylenbereiche können dann mittels üblicher Schweißverfahren an Tanks (z. B. Kunststoffkraftstoffbehälter), sonstige Behälter oder Leitungskomponenten z. B. eines Kraftstoffsystems angebunden werden. Auch das nachträgliche Verbinden eines Formteilbereichs aus einem höheren Polyamid mit z. B. einem Polyethylenbereich, etwa eines Kraftstoffsystems, wobei die Verbindungsfläche vorzugsweise der Polyethylenkomponente mittels Openairplasma vorher aktiviert wird, stellt eine besondere erfindungsgemäße Ausführungsform dar.

Gleichermaßen können extrudierte Profil- oder Rohrenden beispielsweise mittels Plasma aktiviert und mittels Spritzguss- oder weiteren Urformverfahren (Pressen, Prägen, Schäumen, Gießen, Sintern usw.) oder mittels eines Schweißverfahrens mit der anderen Komponente verbunden werden. Genauso kann die Außenfläche eines extrudierten Rohres aus einem höheren Polyamid aktiviert werden, worauf das Rohr mittels eines Querspritzkopfes mit einem thermoplastischen Elastomer oder mit einem Kautschukcompound ummantelt wird. Im letzten Fall kann sich eine Vulkanisation anschließen.

Speziell die Anbindung zu PA6 oder PA66 ist z. B. für Kühlsystemkomponenten interessant. Eine Ankopplung kann über die bereits genannten 2K-Verbindungselemente (z. B. PA12/PA6) im Schweißverfahren erfolgen; genauso können aber auch komplette Module z. B. aus Compounds mit PA12 bzw. PA612, PA PACM12, PA6,3T und PA6 oder PA66 hergestellt werden. Ein einfaches Beispiel ist das Aufspritzen eines PA6-Konnektorbereichs auf die Außenschicht einer plasmavorbehandelten PA12-Leitung. Auf diese Weise können grundsätzlich Anbindungen von z. B. PA11-, PA12- oder PA612-Leitungen zu PA6- oder PA66-Komponenten etwa im Automobil hergestellt werden.

Ein weiterer Anwendungsbereich sind flächige Verbunde, bei denen eine Folie oder ein sonstiges Halbzeug aus einem höheren Polyamid, z. B. PA12, mit Plasma behandelt und mit einem weiteren Material, z. B. PA6 oder PA66 hinterspritzt wird, z.B. bei Motorraumabdeckungen. Weitere Anwendungsbereiche sind Folien (Ein- oder Mehrschichtfolien), die spezielle Oberflächenanforderungen erfüllen müssen. Hier sind u.a. Dekorfolien mit speziellen Anforderungen an Farbe, Glanz, Kratzfestigkeit oder Oberflächeneffekte für die Verwendung als Abdeckung, Beplankung oder Gehäuseteil im Automobilinnenraum oder als Außenteil zu nennen. Generell werden im Falle des Hinterformens eingelegter Folien diese ggf. vorher mit entsprechenden Umformverfahren wie Thermo- oder High-Pressure-Formen vorgeformt .

Weiterhin sind sowohl bei Folien- als auch bei den übrigen Mehrkomponententeilen Verbundbauteile mit integrierten elektrischen, magnetischen oder optischen Funktionen möglich, bei denen Bereiche des Formteils mit entsprechenden Füllstoffen oder Additiven zur Realisierung dieser lokalen Funktionen im Verbundbauteil ausgerüstet sind.

Grundsätzlich können bei der Herstellung des erfindungsgemäßen Verbunds entweder die zu verbindende Oberfläche des Teils gemäß a), diejenige des Teils gemäß b) oder beide mit dem Openairplasma behandelt werden. Welche der Alternativen besser geeignet ist, kann von Fall zu Fall ohne großen Aufwand ausprobiert werden. Im Falle der Kombination von PA12 oder PA612 mit Polyethylen ist nach derzeitigem Stand die Aktivierung der Polyethylenkomponente vorzuziehen; die Aktivierung des PA12 bzw. PA612 und ein anschließendes Aufspritzen von Polyethylenschmelze führt zu deutlich geringerer Haftung.

Eine weitere Möglichkeit der Herstellung von Verbundteilen mit einer Komponente aus einem höheren Polyamid kann über die Aktivierung einer haftenden Zwischenschicht erfolgen. Ein besonderer Fall ist die Verwendung eines funktionalisierten Polyolefins, beispielsweise eines mit Maleinsäureanhydrid gepfropften Polypropylens (PP-MSA, z. B. ADMER® QB 551A), das wie auch das reine PA12 nicht oder sehr schlecht auf ABS-basierten Formmassen haftet. Erstaunlicherweise lässt sich ein fester Verbund der Art PA12/PP-MSA/ABS über die Aktivierung der PP-MSA-Oberfläche z. B. einer Mehrschichtfolie mit anschließendem Hinterfüttern einer ABS-, ABS/PC-, PC/Polybutylenterephthalat(PBT)- oder PBT/PET-Schmelze etwa im Spritzgießverfahren realisieren.

Das erfindungsgemäße Verbundteil kann neben den Komponenten gemäß a) und b) noch weitere Komponenten enthalten, z. B. einen angeschweißten Kraftstofftank, einen Kühlmittel-oder Reinigungsmittelbehälter, Komponenten entsprechender Leitungssysteme oder sonstige Befestigungs- oder Montageelemente. Genauso gut kann es mehr als eine Komponente gemäß a) und/oder mehr als eine Komponente gemäß b) enthalten. Entscheidend ist nur, dass bei der Herstellung mindestens eine Verbundfläche mit einem Openairplasma behandelt und dabei aktiviert wurde.

## Patentansprüche

1. Verfahren zur Herstellung eines Verbundteils, das folgende Komponenten enthält:
a) ein Teil, das ganz oder teilweise aus einer Formmasse besteht, die zu mindestens 40 Gew.-% ein Polyamid enthält, dessen Monomereinheiten im Durchschnitt mindestens 8 C-Atome enthalten, sowie
b) ein Teil aus einer weiteren Formmasse,
**dadurch gekennzeichnet,**
**dass** mindestens eine der Komponenten a) und b) an der Kontaktfläche vor Herstellen des Verbundes mit einem Openairplasma behandelt wird und danach die andere Komponente angeformt wird, wobei des Openairplasma mit Hilfe eines Trägerstroms auf die Oberfläche des Bauteils geführt wird.

2. Verfahren gemäß Anspruch 1,
**dadurch gekennzeichnet,**
**dass** das Polyamid der Komponente a) ausgewählt ist aus der Gruppe PA610, PA612, PA613, PA6,3T, PA810, PA812, PA1010, PA1012, PA11, PA12, PA1212 und PA PACM12.

3. Verfahren gemäß einem der vorhergehenden Ansprüche,
**dadurch gekennzeichnet,**
**dass** das Teil gemäß a) eine zusätzliche Schicht enthält, die mit der Formmasse auf Basis des Polyamids haftend verbunden ist.

4. Verfahren gemäß einem der vorhergehenden Ansprüche,
**dadurch gekennzeichnet,**
**dass** das Teil gemäß b) aus einer Formmasse auf Basis eines Polymeren besteht, wobei das Polymere ausgewählt ist aus der Gruppe PA6, PA66, PA6/6T, Polyolefine, Polyoxymethylen, ABS, Polycarbonat, Polyester, PMMA, PPS, thermoplastisches Elastomer sowie Mischungen hiervon.

5. Verfahren gemäß einem der Ansprüche 1 bis 3,
**dadurch gekennzeichnet,**
**dass** das Teil gemäß b) aus einem Kautschukcompound besteht, das gegebenenfalls vulkanisiert wird.

6. Verbundteil, hergestellt gemäß einem der Ansprüche 1 bis 5.

7. Verbundteil gemäß Anspruch 6,
**dadurch gekennzeichnet,**
**dass** es ein Element eines kraftstoff-, kühlflüssigkeits- oder ölführenden Systems ist.

8. Verbundteil gemäß Anspruch 6,
**dadurch gekennzeichnet,**
**dass** es ein flächiger Verbund ist, der ein Teil gemäß a) in Form einer Folie enthält.

## Claims

1. Process for production of a composite part which comprises the following components:
a) a part which is entirely or to some extent composed of a molding composition which comprises at least 40% by weight of a polyamide whose monomer units contain an average of at least 8 carbon atoms, and also
b) a part composed of another molding composition,
**characterized in that**
at least one of the components a) and b) is treated on the contact surface prior to production of the composite with an Openair plasma and then the other component is molded on, and a stream of carrier material is used to convey the Openair plasma onto the surface of the component.

2. Process according to Claim 1,
**characterized in that**
the polyamide of component a) has been selected from the group of PA610, PA612, PA613, PA6,3T, PA810, PA812, PA1010, PA1012, PA11, PA12, PA1212, and PA PACM12.

3. Process according to any of the preceding claims,
**characterized in that**
the part a) comprises an additional layer which has been adhesive-bonded to the molding composition based on polyamide.

4. Process according to any of the preceding claims,
**characterized in that**
the part b) is composed of a molding composition based on a polymer which has been selected from the group of PA6, PA66, PA6/6T, polyolefins, polyoxymethylene, ABS, polycarbonate, polyester, PMMA, PPS, thermoplastic elastomer, and mixtures thereof.

5. Process according to any of Claims 1 to 3,
**characterized in that**
the part b) is composed of a compounded rubber material which is, if appropriate, vulcanized.

6. Composite part produced according to any of Claims 1 to 5.

7. Composite part according to Claim 6,
**characterized in that**
it is an element of a system that conveys engine fuel, that conveys coolant fluid, or that conveys oil.

8. Composite part according to Claim 6,
**characterized in that**
it is a sheet-like composite which comprises a part a) in the form of a foil.

## Revendications

1. Procédé pour la préparation d'une pièce composite qui contient les composants suivants :
a) une partie qui est constituée totalement ou partiellement par une masse façonnée, qui contient, à raison d'au moins 40% en poids, un polyamide, dont les unités monomères contiennent en moyenne au moins 8 atomes de carbone, ainsi que
b) une partie en une autre masse façonnée,
**caractérisé en ce qu'**au moins un des composants a) et b) est traité au niveau de la surface de contact, avant la production du composite, avec un plasma Openair puis l'autre composant est façonné sur ledit un des composants, le plasma Openair étant guidé à l'aide d'un flux support sur la surface de la pièce.

2. Procédé selon la revendication 1, **caractérisé en ce que** le polyamide du composant a) est choisi dans le groupe formé par le PA610, le PA612, le PA613, le PA6,3T, le PA810, le PA812, le PA1010, le PA1012, le PA11, le PA12, le PA1212 et le PA PACM12.

3. Procédé selon l'une quelconque des revendications précédentes, **caractérisé en ce que** la pièce selon a) contient une couche supplémentaire, qui est assemblée par adhérence à la masse façonnée à base du polyamide.

4. Procédé selon l'une quelconque des revendications précédentes, **caractérisé en ce que** la pièce selon b) est constituée par une masse façonnée à base d'un polymère, le polymère étant choisi dans le groupe formé par le PA6, le PA66, le PA6/6T, les polyoléfines, le polyoxyméthylène, l'ABS, le polycarbonate, le polyester, le PMMA, le PPS, un élastomère thermoplastique ainsi que leurs mélanges.

5. Procédé selon l'une quelconque des revendications 1 à 3, **caractérisé en ce que** la pièce selon b) est constituée par un compound à base de caoutchouc qui est le cas échéant vulcanisé.

6. Pièce composite, produite selon l'une quelconque des revendications 1 à 5.

7. Pièce composite selon la revendication 6, **caractérisée en ce qu'**il s'agit d'un élément d'un système de guidage d'un carburant, d'un liquide de refroidissement ou d'une huile.

8. Pièce composite selon la revendication 6, **caractérisée en ce qu'**il s'agit d'un composite plat, qui contient une pièce selon a) sous forme d'une feuille.
